# EUROPEAN PATENT APPLICATION

(11) **EP 4 546 519 A1**
(43) Date of publication of application: **30.04.2025**
(21) Application number: 22962293.1
(22) Date of filing: 17.10.2022
(51) Int. Cl.: H01M 50/166

(54) **BATTERY CELL, BATTERY AND ELECTRICAL DEVICE**

(71) Applicant: Contemporary Amperex Technology (Hong Kong) Limited, Central, Hong Kong (CN)
(72) Inventor: WANG, Liqin, Ningde, Fujian 352100 (CN); LI, Quankun, Ningde, Fujian 352100 (CN)
(74) Representative: Behr, Wolfgang
(86) International application number: PCT/CN2022/125687
(87) International publication number: WO 2024/082095

(57) **Abstract**

Some embodiments of this application provide a battery cell, a battery, and an electrical device. The battery cell includes: a housing of a hollow structure with an opening; and a cover plate, configured to fit and cover the opening. An extension portion extending toward the housing is disposed at an edge region of the cover plate, and/or, an extension portion extending toward a center of the opening is disposed at an edge region of a sidewall of the housing, where the sidewall is configured to form the opening. The extension portion is configured to connect the housing and the cover plate. The battery cell, battery, and electrical device provided herein can improve processing efficiency of the battery cell.

## Description

### TECHNICAL FIELD

This application relates to the technical field of batteries, and in particular, to a battery cell, a battery, and an electrical device.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles. In the rapid development of battery technology, how to improve the processing and production efficiency of batteries is an urgent technical issue in the battery technology.

### SUMMARY

Some embodiments of this application provide a battery cell, a battery, and an electrical device to improve processing efficiency of the battery cell.

According to a first aspect, a battery cell is provided, including: a housing of a hollow structure with an opening; and a cover plate, configured to fit and cover the opening. An extension portion extending toward the housing is disposed at an edge region of the cover plate, and/or, an extension portion extending toward a center of the opening is disposed at an edge region of a sidewall of the housing, where the sidewall is configured to form the opening. The extension portion is configured to connect the housing and the cover plate.

In the battery cell according to an embodiment of this application, the cover plate and/or the housing includes an extension portion. Through the extension portion, the housing can be connected to the cover plate. For example, for the cover plate, an extension portion extending toward the housing may be disposed in the edge region of the cover plate. For the housing, an extension portion extending toward the center of the opening of the housing may be disposed in the edge region of the sidewall of the housing. Through the disposed extension portion, the contact area between the housing and the cover plate is increased. In this way, in performing hermetic connection between the housing and the cover plate, the area of a connectable region between the housing and the cover plate is increased. For example, the area of a weldable region between the housing and the cover plate is increased. Further, this can reduce the limitation imposed by the thicknesses of the housing and the cover plate on the hermetic connection between the housing and the cover plate. The disposed extension portion can increase the strength of the hermetic connection between the housing and the cover plate, improve the sealing reliability, and improve the processing efficiency and structural strength of the battery cell.

In some embodiments, the extension portion includes a first extension structure. The cover plate includes a body portion and a first extension structure. The first extension structure extends from an edge region of the body portion toward the housing. The body portion is configured to fit and cover the opening. The first extension structure is configured to be connected to the housing.

The first extension structure of the cover plate extends toward the housing, so that the contact region between the cover plate and the housing expands to include the contact region between the first extension structure and the housing. Accordingly, the hermetic connection between the housing and the cover plate can be implemented by hermetically connecting the housing to the first extension structure, for example, by welding. In this way, the limitation imposed by the thickness of the cover plate on the hermetic connection between the housing and the cover plate can be reduced or even avoided. By setting the dimensions of the first extension structure appropriately, the strength of the hermetic connection between the housing and the cover plate can be increased, the sealing reliability can be improved, and the processing efficiency and structural strength of the battery cell can be improved.

In some embodiments, the first extension structure is configured to be connected to an inner surface of the sidewall. The inner surface of the sidewall is a surface, oriented toward inside of the battery cell, of the sidewall. In this way, the first extension structure does not need to occupy the external space of the battery cell. In other words, no protruding part exists on the outer surface of the battery cell, and mutual interference between a plurality of battery cells is avoided during mounting of the battery cells, thereby improving the mounting efficiency of the battery.

In some embodiments, the cover plate further includes a lap portion connected to the body portion. The lap portion extends away from a center of the body portion from an edge of the body portion. The lap portion is connected to a thickness end face of the sidewall. The thickness end face is an end face, oriented toward the cover plate, of the sidewall.

With the lap portion disposed, when the cover plate is fastened to the opening of the housing, the cover plate can be kept positioned on the thickness end face a of the sidewall of the housing to ensure the relative stability between the cover plate and the housing, thereby facilitating the connection between the housing and the first extension structure of the cover plate, for example, facilitating the welding between the housing and the first extension structure, and improving the mounting efficiency of the battery cell.

In some embodiments, the first extension structure is configured to be connected to an outer surface of the sidewall. The outer surface of the sidewall is a surface, oriented away from inside of the battery cell, of the sidewall. In this way, the first extension structure does not need to occupy the internal space of the battery cell. This prevents the first extension structure from interfering with the electrode assembly of the battery cell, improves the utilization rate of the internal space of the battery cell, and increases the energy density of the battery cell.

In some embodiments, a value range of a thickness of the first extension structure is [0.05 mm, 0.2 mm]; and/or a value range of a height by which the first extension structure protrudes from the body portion is [0.05 mm, 0.2 mm].

If the height of the first extension structure is set to an overly large value, the contact area between the first extension structure and the sidewall is very large. However, during hermetic connection, for example, during sealing by welding, the actual welding region does not need to be so large on condition that the connection strength and sealing reliability between the housing and the cover plate are sufficient. Therefore, an overly large value of the height of the first extension structure does not effectively increase the connection strength and sealing reliability between the housing and the cover plate, but instead increases the space occupied by the first extension structure and reduces the utilization rate of the internal space of the battery cell. Conversely, if the height of the first extension structure is set to an overly small value, the contact area between the first extension structure and the sidewall is very small, and the connection strength and sealing reliability between the sidewall and the first extension structure can hardly be ensured to be sufficient, thereby increasing the processing difficulty.

If the thickness of the first extension structure is set to an overly small value, the joint is prone to be melted through during hermetic connection such as welding between the first extension structure and the sidewall, thereby resulting in a sealing failure, reducing the yield rate of the battery cell, and reducing the processing efficiency of the battery cell. Conversely, if the thickness of the first extension structure is set to an overly large value, although the joint is prevented from being melted through, the space occupied by the first extension structure in the battery cell is increased, the space utilization rate of the battery cell is reduced, and in turn, the energy density of the battery cell is reduced.

In some embodiments, the extension portion includes a second extension structure disposed on the sidewall. At least a part of the second extension structure is located in the edge region of the sidewall, and the edge region is configured to form the opening. The second extension structure extends from the sidewall toward the center of the opening. The second extension structure is configured to be connected to the cover plate.

The contact region between the housing and the cover plate expands to include the contact region between the second extension structure and the cover plate. In this way, the hermetic connection between the housing and the cover plate can be implemented by hermetically connecting the second extension structure to the cover plate, for example, by welding. In this way, the limitation imposed by the thickness of the sidewall of the housing on the hermetic connection between the housing and the cover plate can be reduced or even avoided. By setting the dimensions of the second extension structure appropriately, the strength of the hermetic connection between the housing and the cover plate can be increased, the sealing reliability can be improved, and the processing efficiency and structural strength of the battery cell can be improved.

In some embodiments, the sidewall includes a thickness end face. The thickness end face is an end face, oriented toward the cover plate, of the sidewall. The thickness end face is flush with a surface of the second extension structure, and the surface is oriented toward the cover plate. The thickness end face and the second extension structure are configured to be connected to the cover plate.

In this way, the end face, oriented toward the cover plate, of the housing is a plane. There is no height difference between the sidewall and the second extension structure, thereby facilitating the processing of the sidewall on the one hand, and making the sidewall and the second extension structure quickly moldable in one piece. On the other hand, if there is a height difference between the thickness end face of the sidewall and the second extension structure, when the cover plate is fastened to the opening, the outer surface of the battery cell is prone to be recessed or raised at the fastening position, thereby making the outer surface of the battery cell uneven, being prone to interfere with the process of mounting a plurality of battery cells together, and impairing the mounting efficiency of the battery.

In some embodiments, the second extension structure is a protrusion structure located in the edge region of the sidewall and protruding from an inner surface of the sidewall, and the edge region is configured to form the opening. The inner surface of the sidewall is a surface, oriented toward inside of the battery cell, of the sidewall. The second extension structure is implemented by the protrusion structure, thereby facilitating processing on the one hand. On the other hand, the second extension structure is made small in size, and occupies less space in the battery cell, thereby ensuring a high energy density of the battery cell.

In some embodiments, a value range of a thickness of the second extension structure is [0.05 mm, 0.2 mm]; and/or a value range of a height by which the second extension structure protrudes from the sidewall is [0.05 mm, 0.2 mm].

If the height of the second extension structure is set to an overly large value, the contact area between the second extension structure and the cover plate is very large. However, during hermetic connection, for example, during sealing by welding, the actual welding region does not need to be so large on condition that the connection strength and sealing reliability between the housing and the cover plate are sufficient. Therefore, an overly large value of the height of the second extension structure does not effectively increase the connection strength and sealing reliability between the housing and the cover plate, but instead increases the space occupied by the second extension structure and reduces the utilization rate of the internal space of the battery cell. Conversely, if the height of the second extension structure is set to an overly small value, the contact area between the second extension structure and the cover plate is very small. The hermetic connection between the housing and the cover plate is primarily limited by the thicknesses of the housing and the cover plate. The connection strength and sealing reliability between the housing and the cover plate are unable to be improved by disposing the second extension structure, and the processing difficulty is increased.

If the thickness of the second extension structure is set to an overly small value, the joint is prone to be melted through during hermetic connection such as welding between the second extension structure and the cover plate, thereby resulting in a sealing failure, reducing the yield rate of the battery cell, and reducing the processing efficiency of the battery cell. Conversely, if the thickness of the second extension structure is set to an overly large value, although the joint is prevented from being melted through, the space occupied by the second extension structure in the battery cell is increased, the space utilization rate of the battery cell is reduced, and in turn, the energy density of the battery cell is reduced.

In some embodiments, a dimension of the second extension structure along a first direction is equal to a dimension of the sidewall along the first direction, and the first direction is perpendicular to the cover plate.

In this way, in a case that the thickness end face perpendicular to the cover plate is flush with a surface, oriented toward the cover plate, of the second extension structure, if the dimension of the second extension structure along the first direction is equal to the dimension of the sidewall along the first direction, then the dimension of the second extension structure is consistent with the dimension of the sidewall. In this case, the second extension structure can be implemented by increasing the original thickness of the sidewall. Therefore, the original thickness of the sidewall of the housing increases the thickness of the second extension structure, and the contact area between the cover plate and the housing can also be increased, thereby improving the connection strength and sealing reliability between the housing and the cover plate.

In some embodiments, a difference between a total length of the thickness end face plus a surface of the second extension structure along a second direction and a thickness of the cover plate is greater than or equal to 0.01 mm, the surface is oriented toward the cover plate, and the second direction is perpendicular to the sidewall. If the difference is set to an overly small value, due to a limited thickness of the cover plate, then the thickness of the sidewall with the added second extension structure is still relatively small, and the contact area between the housing and the cover plate is still very small. The hermetic connection between the housing and the cover plate is primarily limited by the thicknesses of the housing and the cover plate. The connection strength and sealing reliability between the housing and the cover plate are unable to be improved by disposing the second extension structure, and the processing difficulty is increased.

In some embodiments, the cover plate is a largest-area wall of the battery cell, thereby facilitating mounting of components inside the battery cell, for example, facilitating mounting of the electrode assembly, and speeding up processing of the battery cell.

In some embodiments, a material of the housing includes stainless steel and/or alloy; and/or a material of the cover plate includes stainless steel and/or alloy. Such materials endow the battery cell with high hardness, and ensure sufficient structural strength of the battery cell.

In some embodiments, a value range of a thickness of the housing is [50 µm, 200 µm]; and/or a value range of a thickness of the cover plate is [50 µm, 200 µm], so as to ensure sufficient structural strength of the battery cell.

According to a second aspect, a battery is provided, including a plurality of battery cells according to the first aspect.

According to a third aspect, an electrical device is provided, including the battery cell according to the first aspect. The battery cell is configured to provide electrical energy for the electrical device.

In some embodiments, the electrical device is a vehicle, watercraft, or spacecraft.

### BRIEF DESCRIPTION OF DRAWINGS

FIG. 1 is a schematic structural diagram of a vehicle according to an embodiment of this application;
FIG. 2 is a schematic exploded view of a battery according to an embodiment of this application;
FIG. 3 is a schematic structural diagram of a battery cell according to an embodiment of this application;
FIG. 4 is a schematic exploded view of a battery cell according to an embodiment of this application;
FIG. 5 is a schematic diagram of a partial cross-section of a battery cell according to an embodiment of this application;
FIG. 6 is a close-up view of a partial cross-section of a battery cell according to an embodiment of this application;
FIG. 7 is a schematic diagram of another partial cross-section of a battery cell according to an embodiment of this application;
FIG. 8 is a close-up view of another partial cross-section of a battery cell according to an embodiment of this application;
FIG. 9 is another schematic exploded view of a battery cell according to an embodiment of this application;
FIG. 10 is a schematic diagram of still another partial cross-section of a battery cell according to an embodiment of this application;
FIG. 11 is a close-up view of still another partial cross-section of a battery cell according to an embodiment of this application;
FIG. 12 is a schematic diagram of still another partial cross-section of a battery cell according to an embodiment of this application;
FIG. 13 is a close-up view of still another partial cross-section of a battery cell according to an embodiment of this application;
FIG. 14 is a schematic diagram of still another partial cross-section of a battery cell according to an embodiment of this application;
FIG. 15 is a close-up view of still another partial cross-section of a battery cell according to an embodiment of this application;
FIG. 16 is a schematic exploded view of a partial cross-section of a battery cell according to an embodiment of this application;
FIG. 17 is a schematic diagram of an outer surface of a first wall of a battery cell according to an embodiment of this application;
FIG. 18 is a schematic diagram of a surface of a cover plate according to an embodiment of this application; and
FIG. 19 is a schematic diagram of a partial cross-section of a cover plate according to an embodiment of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as polypropylene (polypropylene, PP) or polyethylene (polyethylene, PE). In addition, the electrode assembly may be of a jelly-roll type structure or a stacked type structure, without being limited herein.

The development of the battery technology needs to consider a plurality of design factors, including performance parameters such as energy density, cycle life, discharge capacity, charge rate, and discharge rate, and also needs to consider safety and processing efficiency of the battery. A battery cell typically includes a housing with an opening and a cover plate configured to fit and cover the opening. The housing may be hermetically connected to the cover plate by welding or other means. To increase the energy density of the battery and reduce the flange structures generated in the hermetic connection between the housing and the cover plate, the hermetic connection may be performed directly in the edge region of the cover plate and at the opening of the housing by welding or other means. However, the thicknesses of the housing and the cover plate are usually small, and such a welding method leads to low welding efficiency and low welding reliability, and is detrimental to the processing efficiency of the battery cell.

Therefore, some embodiments of this application provide a battery cell, a battery, and an electrical device to solve the above problems. In the battery cell according to an embodiment of this application, the cover plate and/or the housing includes an extension portion. Through the extension portion, the cover plate can be connected to the housing. For example, for the cover plate, an extension portion extending toward the housing may be disposed in the edge region of the cover plate. For the housing, an extension portion extending toward the center of the opening of the housing may be disposed in the edge region of the sidewall of the housing. Through the disposed extension portion, the contact area between the cover plate and the housing is increased. In this way, in performing hermetic connection between the housing and the cover plate, the area of a connectable region between the housing and the cover plate is increased, and the limitation imposed by the thicknesses of the housing and the cover plate on the hermetic connection between the housing and the cover plate is reduced. The disposed extension portion can increase the strength of the hermetic connection between the housing and the cover plate, improve the sealing reliability, and improve the processing efficiency and structural strength of the battery cell.

For ease of description in the following embodiments, a vehicle is used as an example of the electrical device.

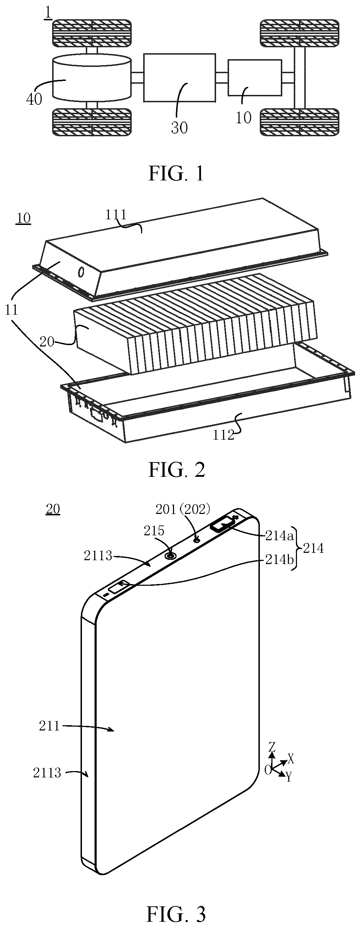

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. For example, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

For example, FIG. 2 is a schematic structural diagram of a battery 10 according to an embodiment of this application. The battery 10 may include a plurality of battery cells 20. The battery 10 may further include a box 11. The interior of the box 11 is a hollow structure. A plurality of battery cells 20 are accommodated in the box 11. FIG. 2 shows a possible implementation of the box 11 according to this embodiment of this application. As shown in FIG. 2, the box 11 may include two parts, herein referred to as a first part 111 and a second part 112 respectively. The first part 111 and the second part 112 are snap-fitted together. The shapes of the first part 111 and the second part 112 may depend on the shape of the plurality of battery cells 20 combined. An opening is created on at least one of the first part 111 or the second part 112. For example, as shown in FIG. 2, the first part 111 and the second part 112 each may be a hollow cuboid, and each may include one opened surface. The opening of the first part 111 is opposite to the opening of the second part 112. The first part 111 and the second part 112 are snap-fitted to each other to form a box 11 that includes a closed cavity.

For another example, different from what is shown in FIG. 2, of the first part 111 and the second part 112, only one is a hollow cuboid with an opening, and the other assumes a plate shape to cover the opening. For example, the second part 112 is a hollow cuboid with one opened surface, and the first part 111 assumes a plate shape. In this case, the first part 111 fits and covers the opening of the second part 112 to form a box 11 with a closed cavity. The cavity may be configured to accommodate a plurality of battery cells 20. The plurality of battery cells 20 are combined and connected in parallel, series, or series-and-parallel pattern, and then placed into the box 11 that is formed by snap-fitting the first part 111 and the second part 112.

In some embodiments, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 11.

Depending on the required power, the number of battery cells 20 in a battery 10 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module. The number of battery cells 20 included in the battery module is not limited, and may be set as required. In addition, in order to improve the space utilization rate of the battery cells 20 in the battery 10, the mounting direction of the battery cells 20 may be set appropriately based on the shapes of a plurality of battery cells 20. Moreover, the mounting directions of different battery cells 20 in the battery 10 may be the same or different. The mounting direction is not particularly limited herein.

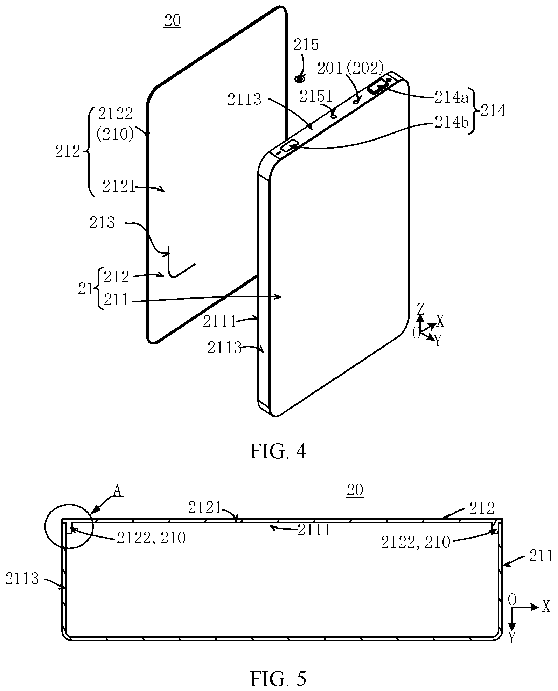

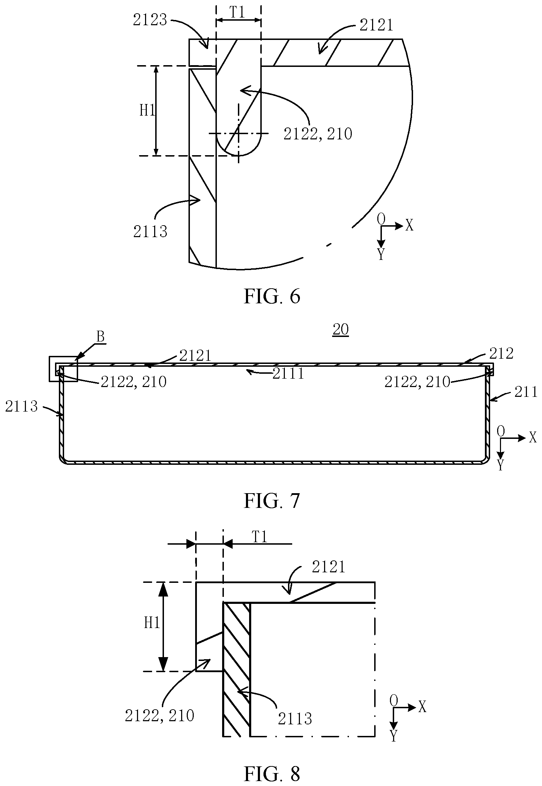

FIG. 3 is a schematic structural diagram of a battery cell 20 according to an embodiment of this application. FIG. 4 is a schematic exploded view of a battery cell 20 according to an embodiment of this application. For example, FIG. 4 may be a possible schematic exploded view of a battery cell 20 shown in FIG. 3. FIG. 5 is a schematic diagram of a partial cross-section of a battery cell 20 according to an embodiment of this application. For example, FIG. 5 is a schematic diagram of a possible cross-section of a housing 211 and a cover plate 212 of the battery cell 20 shown in FIG. 4, where the cross-section is perpendicular to the height direction Z of the battery cell 20. FIG. 6 is a schematic diagram of another partial cross-section of a battery cell 20 according to an embodiment of this application. For example, FIG. 6 is a close-up view of the region A shown in FIG. 5. FIG. 7 is a schematic diagram of another partial cross-section of a battery cell 20 according to an embodiment of this application. For example, FIG. 7 is a schematic diagram of another possible cross-section of a housing 211 and a cover plate 212 of the battery cell 20 shown in FIG. 4, where the cross-section is perpendicular to the height direction Z of the battery cell 20. In other words, the direction of the cross-section may be consistent with the direction of the cross-section shown in FIG. 5. FIG. 8 is a schematic diagram of another partial cross-section of a battery cell 20 according to an embodiment of this application. For example, FIG. 8 may be a close-up view of the region B shown in FIG. 7.

As shown in FIG. 3 to FIG. 8, the battery cell 20 according to an embodiment of this application includes: a housing 211 of a hollow structure with an opening 2111; and a cover plate 212, configured to fit and cover the opening 2111. An extension portion 210 extending toward the housing 211 is disposed at an edge region of the cover plate 212, and/or, an extension portion 210 extending toward a center of the opening 2111 is disposed at an edge region of a sidewall 2113 of the housing 211, where the sidewall is configured to form the opening 2111. The extension portion 210 is configured to connect the housing 211 and the cover plate 212.

Understandably, the battery cell 20 according to this embodiment of this application includes a shell 21. The shell 21 may be a polyhedral hollow structure. The hollow structure may be configured to accommodate an electrode assembly. The shape of the battery cell 20 may be designed flexibly depending on practical applications. In other words, the battery cell 20 may be any polyhedral structure such as a cuboidal or cylindrical structure. Specifically, the battery cell 20 may include a shell 21. The shell 21 includes a plurality of walls so that the battery cell 20 assumes a polyhedral structure. As an example, as shown in FIG. 3 to FIG. 8, this embodiment of this application is primarily described by using an example in which the shell is a cuboidal structure. For a cuboidal battery cell 20, the shell 21 may include six walls.

Specifically, for a rectangular battery cell 20, for ease of description, this embodiment of this application defines three reference directions. As shown in FIG. 3 to FIG. 8, the thickness direction of the battery cell 20 is Y-direction, the height direction of the battery cell 20 is Z-direction, and the width direction of the battery cell 20 is X-direction. The thickness direction Y, the height direction Z, and the width direction X of the battery cell 20 are perpendicular to each other.

The shell 21 in this embodiment of this application may include a housing 211 and a cover plate 212. The housing 211 may be a hollow structure with an opening 2111 formed at one or more ends. For example, if the housing 211 is a hollow structure with an opening 2111 formed at one end, then one cover plate 212 may be disposed to fit and cover one opening 2111 of the housing 211. If the housing 211 is a hollow structure with openings 2111 formed at two opposite ends, then two cover plates 212 may be disposed. The two cover plates 212 fit and cover the openings at the two ends of the housing 211 respectively. However, this application is not limited to such examples.

For ease of description, as shown in FIG. 3 to FIG. 8, some embodiments of this application are described by using an example in which the housing 211 includes one opening 2111. Correspondingly, the cover plate 212 is configured to fit and cover the opening 2111. Optionally, the cover plate 212 in such embodiments of this application may fit and cover the opening 2111 of the case 211 by welding, for example, so as to implement hermetic connection between the housing 211 and the cover plate 212 to improve the sealing reliability.

In the battery cell 20 according to an embodiment of this application, the cover plate 212 and/or the housing 211 includes an extension portion 210. Through the extension portion 210, the housing 211 can be connected to the cover plate 212. For example, for the cover plate 212, an extension portion 210 extending toward the housing 211 may be disposed in the edge region of the cover plate 212. For the housing 211, an extension portion 210 extending toward the center of the opening 2111 of the housing 211 may be disposed in the edge region of the sidewall 2113 of the housing 211. Through the disposed extension portion 210, the contact area between the housing 211 and the cover plate 212 is increased. In this way, in performing hermetic connection between the housing 211 and the cover plate 212, the area of a connectable region between the housing 211 and the cover plate 212 is increased. For example, the area of a weldable region between the housing 211 and the cover plate 212 is increased. Further, this can reduce the limitation imposed by the thicknesses of the housing 211 and the cover plate 212 on the hermetic connection between the housing 211 and the cover plate 212. The disposed extension portion 210 can increase the strength of the hermetic connection between the housing 211 and the cover plate 212, improve the sealing reliability, and improve the processing efficiency and structural strength of the battery cell 20.

The following describes the extension portion 210 on the cover plate 212 in detail first with reference to drawings. Specifically, the extension portion 210 includes a first extension structure 2122. The cover plate 212 includes a body portion 2121 and a first extension structure 2122. The first extension structure 2122 extends from an edge region of the body portion 2121 toward the housing 211. The body portion 2121 is configured to fit and cover the opening 2111. The first extension structure 2122 is configured to be connected to the housing 211. The first extension structure 2122 of the cover plate 212 extends toward the housing 211, so that the contact region between the cover plate 212 and the housing 211 expands to include the contact region between the first extension structure 2122 and the housing 211. Accordingly, the hermetic connection between the housing 211 and the cover plate 212 can be implemented by hermetically connecting the housing 211 to the first extension structure 2122, for example, by welding. In this way, the limitation imposed by the thickness of the cover plate 212 on the hermetic connection between the housing 211 and the cover plate 212 can be reduced or even avoided. By setting the dimensions of the first extension structure 2122 appropriately, the strength of the hermetic connection between the housing 211 and the cover plate 212 can be increased, the sealing reliability can be improved, and the processing efficiency and structural strength of the battery cell 20 can be improved.

Understandably, the cover plate 212 in an embodiment of this application includes a body portion 2121. The body portion 2121 may be approximately a flat platelike structure to cover the opening 2111 of the housing 211. Optionally, the shape of the surface of the body portion 2121 may be set depending on practical applications. For example, for a cylindrical battery cell 20, the opening 2111 of the housing 211 is a bottom surface of the cylinder. Therefore, the surface of the body portion 2121 of the cover plate 212 may be circular, so as to cover the circular opening 2111. For another example, as shown in FIG. 3 to FIG. 8, for a cuboidal battery cell 20, the opening 2111 of the housing 211 may be any surface of the cuboid. Therefore, the surface of the body portion 2121 of the cover plate 212 may be rectangular, so as to cover the rectangular opening 2111.

Correspondingly, the number of edges of the body portion 2121 varies depending on the shape of the body portion. For example, for a body portion 2121 with a circular surface, the body portion 2121 includes one continuous edge; for a body portion 2121 with a rectangular surface, the body portion 2121 includes four intersecting edges. The edge region of the body portion 2121 in an embodiment of this application is a region close to an edge of the body portion 2121. The first extension structure 2122 of the cover plate 212 extends from the edge region of the body portion 2121 toward the housing 211, indicating that the first extension structure 2122 is located in the region close to the edge of the body portion 2121. Moreover, the body portion 2121 includes at least one edge. The first extension structure 2122 may be located in edge regions corresponding to at least a part of edges. For example, an embodiment of this application cites an example in which the first extension structure 2122 may be located in the edge regions corresponding to all edges of the body portion 2121. In other words, the first extension structure 2122 is disposed at the edge regions around the body portion 2121. As shown in FIG. 3 to FIG. 8, the first extension structure 2122 may be located in the edge regions corresponding to all four edges, so as to maximize the sealing reliability between the housing 211 and the cover plate 212. Alternatively, instead, the first extension structure 2122 may be located in only a part of the edge regions. For example, unlike the illustration in FIG. 3 to FIG. 8, the first extension structure 2122 may be located in the edge regions corresponding to only some of the four edges, but an embodiment of this application is not limited to such examples.

In an embodiment of this application, the specific positioning of the first extension structure 2122 may be flexibly selected depending on practical applications. For example, as shown in FIG. 3 to FIG. 8, in an embodiment of this application, the first extension structure 2122 is a bulge on a surface of the cover plate 212, and the surface is oriented toward the inside of the battery cell 20. In other words, the first extension structure 2122 protrudes from a surface of the body portion 2121 of the cover plate 212, and the surface is oriented toward the inside of the battery cell 20.

Optionally, the relative position between the first extension structure 2122 and the housing 211 may be set depending on practical applications. For example, as shown in FIG. 5 and FIG. 6, the first extension structure 2122 is configured to be connected to an inner surface of the sidewall 2113. The inner surface of the sidewall 2113 is a surface, oriented toward the inside of the battery cell 20, of the sidewall 2113. In this way, the first extension structure 2122 does not need to occupy the external space of the battery cell 20. In other words, no protruding part exists on the outer surface of the battery cell 20, and mutual interference between a plurality of battery cells is avoided during mounting of the battery cells 20, thereby improving the mounting efficiency of the battery 10.

In an embodiment of this application, as shown in FIG. 5 and FIG. 6, the cover plate 212 further includes a lap portion 2123 connected to the body portion 2121. The lap portion 2123 extends away from a center of the body portion 2121 from an edge of the body portion 2121. The lap portion 2123 is connected to a thickness end face 2113a of the sidewall 2113. The thickness end face 2113a is an end face, oriented toward the cover plate 212, of the sidewall 2113. With the lap portion 2123 disposed, when the cover plate 212 is fastened to the opening 2111 of the housing 211, the cover plate 212 can be kept positioned on the thickness end face 2113a of the sidewall 2113 of the housing 211 to ensure the relative stability between the cover plate 212 and the housing 211, thereby facilitating the connection between the housing 211 and the first extension structure 2122 of the cover plate 212, for example, facilitating the welding between the housing and the first extension structure, and improving the mounting efficiency of the battery cell 20.

For another example, as shown in FIG. 7 and FIG. 8, the first extension structure 2122 is configured to be connected to an outer surface of the sidewall 2113. The outer surface of the sidewall 2113 is a surface, oriented away from the inside of the battery cell 20, of the sidewall 2113. In this way, the first extension structure 2122 does not need to occupy the internal space of the battery cell 20. This prevents the first extension structure 2122 from interfering with the electrode assembly of the battery cell 20, improves the utilization rate of the internal space of the battery cell 20, and increases the energy density of the battery cell 20.

Optionally, the above two implementations may be combined. For example, the first extension structure 2122 is disposed on both the inner surface and the outer surface of the sidewall 2113 of the housing 211 to improve the connection strength and sealing reliability between the housing 211 and the cover plate 212.

Optionally, the dimensions of the first extension structure 2122 in different directions in an embodiment of this application may be set flexibly depending on practical applications. For example, as shown in FIG. 6 to FIG. 8, the value of the height H1 by which the first extension structure 2122 protrudes from the body portion 2121 may be set flexibly depending on practical applications; and/or the value of the thickness T1 of the first extension structure 2122 may be set flexibly depending on practical applications. The thickness direction of the first extension structure 2122 is perpendicular to the height direction of the first extension structure 2122.

Understandably, the height H1 of the first extension structure 2122 is a dimension of the first extension structure 2122 in the height direction thereof. For example, the height H1 may be a minimum dimension of the first extension structure 2122 in the height direction. In addition, the height direction of the first extension structure 2122 is perpendicular to the surface of the body portion 2121, or, in other words, the height direction of the first extension structure 2122 is the thickness direction of the body portion 2121. For example, when the thickness direction of the body portion 2121 is a thickness direction Y of the battery cell 20, the height direction of the first extension structure 2122 is also the thickness direction Y of the battery cell 20.

Therefore, the height H1 of the first extension structure 2122 may affect the contact area between the first extension structure 2122 and the sidewall 2113 of the housing 21. As shown in FIG. 6 to FIG. 8, if the height H1 of the first extension structure 2122 is set to an overly large value, the contact area between the first extension structure 2122 and the sidewall 2113 is very large. However, during hermetic connection, for example, during sealing by welding, the actual welding region does not need to be so large on condition that the connection strength and sealing reliability between the housing 211 and the cover plate 212 are sufficient. Therefore, an overly large value of the height H1 of the first extension structure 2122 does not effectively increase the connection strength and sealing reliability between the housing 211 and the cover plate 212, but instead increases the space occupied by the first extension structure 2122 and reduces the utilization rate of the internal space of the battery cell 20. Conversely, if the height H1 of the first extension structure 2122 is set to an overly small value, the contact area between the first extension structure 2122 and the sidewall 2113 is very small, and the connection strength and sealing reliability between the sidewall 2113 and the first extension structure 2122 can hardly be ensured to be sufficient, thereby increasing the processing difficulty.

Therefore, the height H1 of the first extension structure 2122 needs to avoid being overly large or overly small. For example, the value range of the height H1 by which the first extension structure 2122 protrudes from the body portion 2121 is [0.05 mm, 0.2 mm]. For another example, the height H1 of the first extension structure 2122 may be set to 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm.

Understandably, the thickness T1 of the first extension structure 2122 is a dimension of the first extension structure 2122 in the thickness direction thereof. For example, the thickness T2 may be a minimum dimension of the first extension structure 2122 in the thickness direction. In addition, the thickness direction of the first extension structure 2122 is perpendicular to the height direction of the first extension structure 2122, and also perpendicular to the extension direction of the first extension structure 2122. For example, as shown in FIG. 6 to FIG. 8, if the thickness direction Y of the battery cell 20 is perpendicular to the body portion 2121, the height direction of the first extension structure 2122 is the thickness direction Y of the battery cell 20. Correspondingly, for the first extension structure 2122 located at the body portion 2121 and parallel to an edge along the width direction X of the battery cell, that is, for the first extension structure 2122 extending along the width direction X of the battery cell, the thickness direction of the first extension structure is the height direction Z of the battery cell 20. Alternatively, for the first extension structure 2122 located at the body portion 2121 and parallel to an edge along the height direction Z of the battery cell, that is, for the first extension structure 2122 extending along the height direction Z of the battery cell, the thickness direction of the first extension structure is the width direction X of the battery cell 20.

Understandably, the value range of the thickness T1 of the first extension structure 2122 may be set depending on practical applications. Specifically, if the thickness T1 of the first extension structure 2122 is set to an overly small value, the joint is prone to be melted through during hermetic connection such as welding between the first extension structure 2122 and the sidewall 2113, thereby resulting in a sealing failure, reducing the yield rate of the battery cell 20, and reducing the processing efficiency of the battery cell 20. Conversely, if the thickness T1 of the first extension structure 2122 is set to an overly large value, although the joint is prevented from being melted through, the space occupied by the first extension structure 2122 in the battery cell 20 is increased, the space utilization rate of the battery cell 20 is reduced, and in turn, the energy density of the battery cell 20 is reduced.

Therefore, the thickness T1 of the first extension structure 2122 in an embodiment of this application needs to avoid being overly large or overly small. For example, the value range of the thickness T1 of the first extension structure 2122 is [0.05 mm, 0.2 mm]. For another example, the thickness T1 of the first extension structure 2122 may be set to 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm.

Optionally, the extension portion 210 disposed on the cover plate 212 in an embodiment of this application may include the first extension structure 2122 of the cover plate 212, or, differently from what is shown in FIG. 3 to FIG. 8, the extension portion 210 of the cover plate 212 may be implemented in other manners. For example, the extension portion 210 may be implemented by increasing the thickness of the cover plate 212. Specifically, the arrangement of the cover plate 212 is equivalent to: the extension portion 210 and the body portion 2121 are stacked along the thickness direction of the cover plate 212, and the extension portion 210 is located on one side of the body portion 2121, the side being oriented toward the inside of the battery cell 20. In this way, with the increase of the thickness of the cover plate 212, the contact area between the cover plate 212 and the housing 211 can also be increased, thereby improving the connection strength and sealing reliability between the housing 211 and the cover plate 212. However, considering that the cover plate 212 may be the largest-area wall of the battery cell 20, if the thickness of the cover plate 212 is increased, the internal space of the battery cell 20 will be reduced and the energy density of the battery cell 20 will be reduced on condition that the external volume of the battery cell 20 remains unchanged. Therefore, an embodiment of this application is described below by using an example in which the first extension structure 2122 is a bulge on the cover plate 212, but this embodiment of this application is not limited to the example.

Understandably, the extension portion 210 disposed on the cover plate 212 has been described above with reference to drawings. The following describes an extension portion 210 disposed on the housing 211 with reference to drawings.

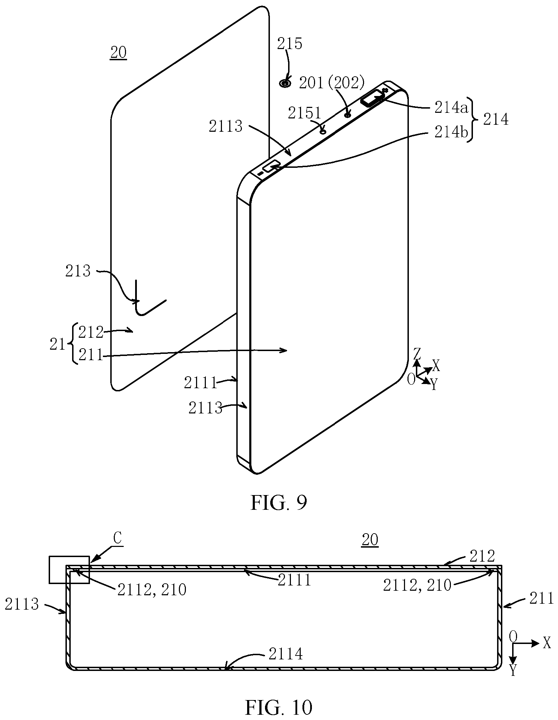

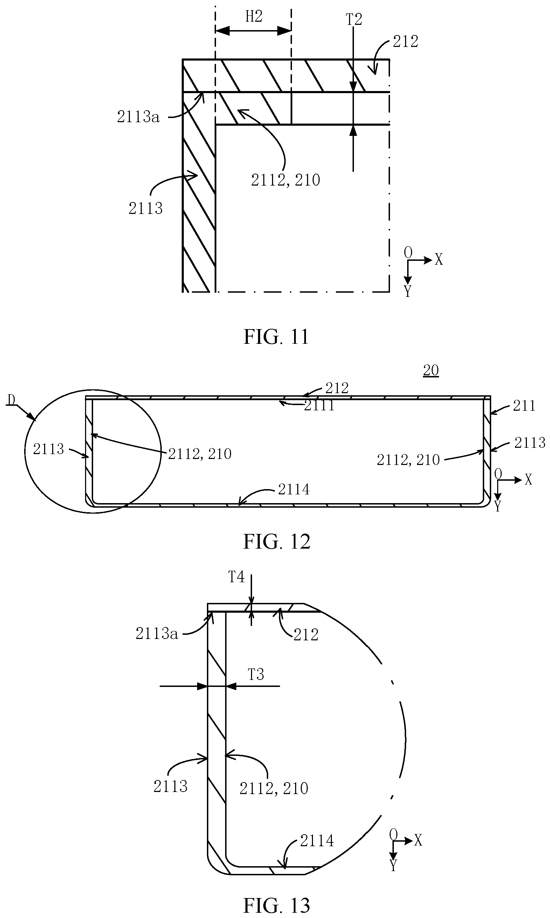

FIG. 9 is another schematic exploded view of a battery cell 20 according to an embodiment of this application. For example, FIG. 9 is another possible schematic exploded view of the battery cell 20 shown in FIG. 3. FIG. 10 is a schematic diagram of a partial cross-section of a battery cell 20 according to an embodiment of this application. For example, FIG. 10 is a schematic diagram of a possible cross-section of a housing 211 and a cover plate 212 of the battery cell 20 shown in FIG. 9, where the cross-section is perpendicular to the height direction Z of the battery cell 20. FIG. 11 is a schematic diagram of still another partial cross-section of a battery cell 20 according to an embodiment of this application. For example, FIG. 11 is a close-up view of the region C shown in FIG. 10. FIG. 12 is a schematic diagram of another partial cross-section of a battery cell 20 according to an embodiment of this application. For example, FIG. 12 is a schematic diagram of another possible cross-section of a housing 211 and a cover plate 212 of the battery cell 20 shown in FIG. 9, where the cross-section is perpendicular to the height direction Z of the battery cell 20. In other words, the direction of the cross-section may be consistent with the direction of the cross-section shown in FIG. 10. FIG. 13 is a schematic diagram of another partial cross-section of a battery cell 20 according to an embodiment of this application. For example, FIG. 13 may be a close-up view of the region D shown in FIG. 12.

As shown in FIG. 9 to FIG. 13, the extension portion 210 includes a second extension structure 2112 disposed on the sidewall 2113. At least a part of the second extension structure 2112 is located in the edge region of the sidewall 2113, and the edge region is configured to form the opening 2111. The second extension structure 2112 extends from the sidewall 2113 toward the center of the opening 2111. The second extension structure 2112 is configured to be connected to the cover plate 212. The second extension structure 2112 is at least partially located in the edge region of the sidewall 2113, and the second extension structure 2112 extends from the sidewall 2113 toward the center of the opening 2111. Therefore, the contact region between the housing 211 and the cover plate 212 expands to include the contact region between the second extension structure 2112 and the cover plate 212. In this way, the hermetic connection between the housing 211 and the cover plate 212 can be implemented by hermetically connecting the second extension structure 2112 to the cover plate 212, for example, by welding. In this way, the limitation imposed by the thickness of the sidewall 2113 of the housing 211 on the hermetic connection between the housing 211 and the cover plate 212 can be reduced or even avoided. By setting the dimensions of the second extension structure 2112 appropriately, the strength of the hermetic connection between the housing 211 and the cover plate 212 can be increased, the sealing reliability can be improved, and the processing efficiency and structural strength of the battery cell 20 can be improved.

Understandably, the shape of the housing 211 in an embodiment of this application may be set depending on practical applications. Each housing 211 of a different shape may include a different number of sidewalls 2113. The sidewall 2113 of the housing 211 referred to herein may mean a sidewall, which is configured to form an opening 2111, of the housing 211. In other words, the sidewall 2113 of the housing 211 is a wall, adjacent to the opening 2111, of the housing 211. For example, if the housing 211 is a cylinder with an opening created at the bottom, then the housing 211 includes one sidewall 2113. The sidewall 2113 is a cylindrical surface. For another example, as shown in FIG. 9 to FIG. 13, some embodiments of this application cite an example in which the housing 211 is a cuboid with an opening created at one end. Therefore, the housing 211 includes four intersecting sidewalls 2113. Each of the sidewalls 2113 is a rectangle. In addition, the sidewall 2113 of the housing 211 in an embodiment of this application may be any one of the four sidewalls 2113. For example, the description of a sidewall 2113 of the housing 211 below is applicable to all sidewalls 2113 of the housing 211.

Correspondingly, the second extension structure 2112 in an embodiment of this application may be disposed on at least one sidewall 2113 of the housing 211. For example, an embodiment of this application cites an example in which the second extension structure 2112 is located on all sidewalls 2113 of the housing 211. In other words, the second extension structure 2112 is disposed on all sidewalls 2113 around the opening 2111 of the housing 211. As shown in FIG. 9 to FIG. 13, the second extension structure 2112 may be located on four sidewalls 2113, so as to maximize the sealing reliability between the housing 211 and the cover plate 212. Alternatively, instead, the second extension structure 2112 may be located on just a part of the sidewalls 2113. For example, unlike the illustration in FIG. 9 to FIG. 13, the second extension structure 2112 may be located on just some sidewalls 2113 among the four sidewalls 2113, but an embodiment of this application is not limited to such examples.

At least a part of the second extension structure 2112 in an embodiment of this application is located in an edge region of the sidewall 2113, and the edge region is configured to form the opening 2111. The edge region of the sidewall 2113 is a region on an end face of the sidewall 2113, the end face being configured to form the opening 2111 of the housing 211; and is also an edge region, close to the cover plate 212, of the sidewall 2113.

Optionally, the relative position between the second extension structure 2112 and the sidewall 2113 in an embodiment of this application may be set depending on practical applications. For example, as shown in FIG. 9 to FIG. 13, the sidewall 2113 includes a thickness end face 2113a. The thickness end face 2113a is an end face, oriented toward the cover plate 212, of the sidewall 2113. The thickness end face 2113a is flush with a surface of the second extension structure 2112, and the surface is oriented toward the cover plate 212. The thickness end face 2113a and the second extension structure 2112 are configured to be connected to the cover plate 212. In this way, the end face, oriented toward the cover plate 212, of the housing 211 is a plane. There is no height difference between the sidewall 2113 and the second extension structure 2112, thereby facilitating the processing of the sidewall 2113 on the one hand, and making the sidewall 2113 and the second extension structure 2112 quickly moldable in one piece. On the other hand, if there is a height difference between the thickness end face 2113a of the sidewall 2113 and the second extension structure 2112, when the cover plate 212 is fastened to the opening 2111, the outer surface of the battery cell 20 is prone to be recessed or raised at the fastening position, thereby making the outer surface of the battery cell 20 uneven, being prone to interfere with the process of mounting a plurality of battery cells 20 together, and impairing the mounting efficiency of the battery 10.

Optionally, the specific positioning of the second extension structure 2112 in an embodiment of this application may be flexibly selected depending on practical applications. For example, as shown in FIG. 10 and FIG. 11, the second extension structure 2112 is a protrusion structure located in the edge region of the sidewall 2113 and protruding from an inner surface of the sidewall 2113, and the edge region is configured to form the opening 2111. The inner surface of the sidewall 2113 is a surface, oriented toward inside of the battery cell 20, of the sidewall 2113. The second extension structure 2112 is implemented by the protrusion structure, thereby facilitating processing on the one hand. On the other hand, the second extension structure 2112 is made small in size, and occupies less space in the battery cell 20, thereby ensuring a high energy density of the battery cell 20.

Optionally, contrary to the positioning shown in FIG. 10 and FIG. 11, the second extension structure 2112 may be located on the outer surface of the sidewall 2113 instead. Specifically, the second extension structure 2112 is a protrusion structure located in an edge region of the sidewall 2113 and protruding from the outer surface of the sidewall 2113 away from the sidewall 2113, and the edge region is configured to form the opening 2111. The outer surface of the sidewall 2113 is a surface, oriented away from the inside of the battery cell 20, of the sidewall 2113. The second extension structure 2112 disposed on the outer surface of the sidewall 2113 can avoid occupying the space inside the battery cell 20, thereby improving the utilization rate of the space inside the battery cell 20, and increasing the energy density of the battery cell. In addition, the second extension structure 2112 disposed on the outer surface of the sidewall 2113 facilitates processing and connection between the cover plate 212 and the housing 211, thereby improving the processing efficiency of the battery cell 20.

Optionally, in a case that the second extension structure 2112 is a protrusion structure on the inner surface or outer surface of the sidewall 2113, the dimensions of the second extension structure 2112 may be set depending on practical applications. For example, the value of the height H2 by which the second extension structure 2112 protrudes from the sidewall 2113 may be set flexibly depending on practical applications; and/or the value of the thickness T2 of the second extension structure 2112 may be set flexibly depending on practical applications. The thickness direction of the second extension structure 2112 is perpendicular to the height direction of the second extension structure 2112.

Understandably, the height H2 of the second extension structure 2112 is a dimension of the second extension structure 2112 in the height direction thereof. For example, the height H2 may be a minimum dimension of the second extension structure 2112 in the height direction. In addition, the height direction of the second extension structure 2112 is perpendicular to the sidewall 2113, or, in other words, the height direction of the second extension structure 2112 is the thickness direction of the sidewall 2113. For example, as shown in FIG. 10 to FIG. 11, the thickness direction of each different sidewall 2113 varies. When the thickness direction of the sidewall 2113 is the width direction X of the battery cell 20, the height direction of the second extension structure 2112 is also the width direction X of the battery cell 20. When the thickness direction of the sidewall 2113 is the height direction Z of the battery cell 20, the height direction of the second extension structure 2112 is also the height direction Z of the battery cell 20.

The height H2 of the second extension structure 2112 may affect the contact area between the second extension structure 2112 and the cover plate 212. As shown in FIG. 10 to FIG. 11, if the height H2 of the second extension structure 2112 is set to an overly large value, the contact area between the second extension structure 2112 and the cover plate 212 is very large. However, during hermetic connection, for example, during sealing by welding, the actual welding region does not need to be so large on condition that the connection strength and sealing reliability between the housing 211 and the cover plate 212 are sufficient. Therefore, an overly large value of the height H2 of the second extension structure 2112 does not effectively increase the connection strength and sealing reliability between the housing 211 and the cover plate 212, but instead increases the space occupied by the second extension structure 2112 and reduces the utilization rate of the internal space of the battery cell 20. Conversely, if the height H2 of the second extension structure 2112 is set to an overly small value, the contact area between the second extension structure 2112 and the cover plate is very small. The hermetic connection between the housing 211 and the cover plate 212 is primarily limited by the thicknesses of the housing 211 and the cover plate 212. The connection strength and sealing reliability between the housing 211 and the cover plate 212 are unable to be improved by disposing the second extension structure 2112, and the processing difficulty is increased.

Therefore, the height H2 of the second extension structure 2112 in an embodiment of this application needs to avoid being overly large or overly small. For example, the value range of the height H2 by which the second extension structure 2112 protrudes from the sidewall 2113 is [0.05 mm, 0.2 mm]. For another example, the height H2 of the second extension structure 2112 may be set to 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm.

Understandably, the thickness T2 of the second extension structure 2112 is a dimension of the second extension structure 2112 in the thickness direction thereof. For example, the thickness T2 may be a minimum dimension value of the second extension structure 2112 in the thickness direction. In addition, the thickness direction of the second extension structure 2112 is perpendicular to a bottom wall of the housing 211, or, in other words, the thickness direction of the second extension structure 2112 is a thickness direction of the bottom wall of the housing 211. The bottom wall of the housing 211 is a wall opposite to the opening 2111. For example, as shown in FIG. 10 to FIG. 11, when the thickness direction of the bottom wall of the housing 211 is the thickness direction Y of the battery cell 20, the thickness direction of the second extension structure 2112 is also the thickness direction Y of the battery cell 20.

Understandably, the value range of the thickness T2 of the second extension structure 2112 may be set depending on practical applications. Specifically, if the thickness T2 of the second extension structure 2112 is set to an overly small value, the joint is prone to be melted through during hermetic connection such as welding between the second extension structure 2112 and the cover plate 212, thereby resulting in a sealing failure, reducing the yield rate of the battery cell 20, and reducing the processing efficiency of the battery cell 20. Conversely, if the thickness T2 of the second extension structure 2112 is set to an overly large value, although the joint is prevented from being melted through, the space occupied by the second extension structure 2112 in the battery cell 20 is increased, the space utilization rate of the battery cell 20 is reduced, and in turn, the energy density of the battery cell 20 is reduced.

Therefore, the thickness T2 of the second extension structure 2112 in an embodiment of this application needs to avoid being overly large or overly small. For example, the value range of the thickness T2 of the second extension structure 2112 is [0.05 mm, 0.2 mm]. For another example, the thickness T2 of the second extension structure 2112 may be set to 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm.

Optionally, in another embodiment of this application, the second extension structure 2112 disclosed herein may be implemented by other means. For example, as shown in FIG. 12 to FIG. 13, in a case that the thickness end face 2113a is flush with a surface, oriented toward the cover plate 212, of the second extension structure 2112, the dimension of the second extension structure 2112 along the first direction Y is equal to the dimension of the sidewall 2113 along the first direction Y. The first direction Y and perpendicular to the cover plate 212. Specifically, that the first direction is perpendicular to the cover plate 212 means that the first direction is the thickness direction of the cover plate 212. For example, if the thickness direction of the cover plate 212 is the thickness direction Y of the battery cell 20, then the first direction is also the thickness direction of the battery cell 20. In this way, in a case that the thickness end face 2113a perpendicular to the cover plate 212 is flush with a surface, oriented toward the cover plate 212, of the second extension structure 2112, if the dimension of the second extension structure 2112 along the first direction is equal to the dimension of the sidewall 2113 along the first direction, then the dimension of the second extension structure 2112 is consistent with the dimension of the sidewall 2113. In this case, the second extension structure 2112 can be implemented by increasing the original thickness of the sidewall 2113.

Specifically, the thickened sidewall 2113 may be regarded as a result of stacking the second extension structure 2112 and the originally thin sidewall 2113 along the thickness direction of the sidewall 2113. In this way, the original thickness of the sidewall 2113 of the housing 211 increases the thickness of the second extension structure 2112, and the contact area between the cover plate 212 and the housing 211 can also be increased, thereby improving the connection strength and sealing reliability between the housing 211 and the cover plate 212.

Optionally, the thickness T3 of the thickened sidewall 2113 may be set depending on practical applications. For example, the increment of the thickness of the sidewall 2113 may be set based on the thickness T4 of the cover plate 212. Specifically, as shown in FIG. 12 to FIG. 13, a difference between a total length T3 of the thickness end face 2113a plus a surface of the second extension structure 2112 along a second direction X and a thickness T4 of the cover plate 212 is greater than or equal to 0.01 mm, where the surface is oriented toward the cover plate 212. The second direction X is perpendicular to the sidewall 2113. In other words, the difference between the total thickness T3 of the thickened sidewall 2113 and the thickness T4 of the cover plate 212 is generally greater than or equal to 0.01. Conversely, if the difference is set to an overly small value, due to a limited thickness of the cover plate 212, then the thickness T3 of the sidewall 2113 with the added second extension structure 2112 is still relatively small, and the contact area between the housing 211 and the cover plate 212 is still very small. The hermetic connection between the housing 211 and the cover plate 212 is primarily limited by the thicknesses of the housing 211 and the cover plate 212. The connection strength and sealing reliability between the housing 211 and the cover plate 212 are unable to be improved by disposing the second extension structure 2112, and the processing difficulty is increased. Therefore, the difference between the thickness T3 and the thickness T4 needs to avoid being overly small.

Understandably, the extension portion 210 according to an embodiment of this application has been described above with reference to drawings. The following describes other parts of the battery cell 20 according to an embodiment of this application with reference to drawings.

Optionally, other components may be further disposed on the shell 21 in an embodiment of this application. For example, the shell 21 may be further fitted with an injection port 2151 and a sealing assembly 215 configured to seal the injection port 2151. For example, as shown in FIG. 3 to FIG. 13, an injection port 2151 and a sealing assembly 215 configured to seal the injection port 2151 may be disposed on the first sidewall 2112 or the second sidewall 2113 of the battery cell 20. The injection port 2151 is configured to inject an electrolyte solution into the battery cell 20. The sealing assembly 215 seals the injection port 2151. For example, the injection port may be sealed by laser welding, so as to improve the sealing reliability.

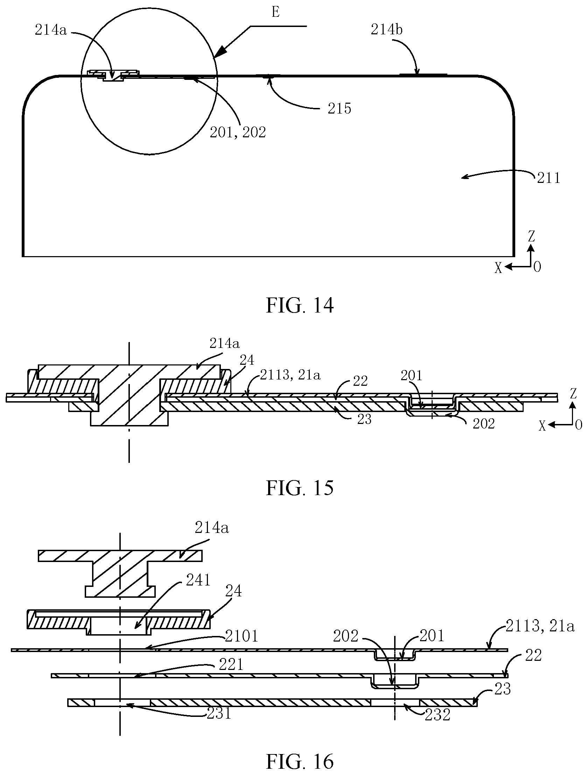

FIG. 14 is a schematic diagram of a partial cross-section of a battery cell 20 according to an embodiment of this application. Specifically, FIG. 14 may be a schematic diagram of a partial cross-section of any one type of housing 211 of the battery cell 20 according to an embodiment of this application, where the cross-section is perpendicular to a thickness direction Y of the battery cell 20. The battery cell 20 shown in FIG. 14 may be any one of the battery cells 20 shown in FIG. 3 to FIG. 13. FIG. 15 is a close-up view of a partial cross-section of a battery cell 20 according to an embodiment of this application. For example, FIG. 15 is a close-up view of the region E shown in FIG. 14. FIG. 16 is a schematic exploded view of a partial cross-section of a battery cell 20 according to an embodiment of this application. For example, FIG. 16 is a schematic exploded view of the partial battery cell 20 shown in FIG. 15.

As shown in FIG. 14 to FIG. 16, an electrode terminal 214 is disposed on a first wall 21a of the battery cell 20. A first through-hole 2101 is created in the first wall 21a. The battery cell 20 further includes an insulation structure 22. The insulation structure 22 is disposed on one side of the first wall 21a, the side being oriented toward the inside of the battery cell 20. A second through-hole 221 corresponding to the first through-hole 2101 is created in the insulation structure 22. The electrode terminal 214 runs through the first through-hole 2101 and the second through-hole 221, so as to rivet the first wall 21a to the insulation structure 22.

Understandably, the electrode terminal 214 is disposed on the first wall 21a in this embodiment of this application. The electrode terminal 214 may be any one electrode terminal 214 included in the battery cell 20. Specifically, the electrode terminal 214 is configured to be electrically connected to the electrode assembly in the battery cell 20 to output electrical energy of the battery cell 20. As shown in FIG. 14 to FIG. 16, the battery cell 20 may include at least two electrode terminals 214. The at least two electrode terminals 214 may include at least one positive electrode terminal 214a and at least one negative electrode terminal 214b. The positive electrode terminal 214a is configured to be electrically connected to a positive tab of the electrode assembly, and the negative electrode terminal 214b is configured to be electrically connected to a negative tab of the electrode assembly. The positive electrode terminal 214a may be connected to the positive tab directly or indirectly, and the negative electrode terminal 214b may be connected to the negative tab directly or indirectly. For example, the positive electrode terminal 214a is electrically connected to the positive tab 222a by one connection component 23, and the negative electrode terminal 214b is electrically connected to the negative tab 222b by one connection component 23.

Understandably, different electrode terminals 214 may be located on the same wall or different walls of the battery cell 20. For example, as shown in FIG. 14 to FIG. 16, an embodiment of this application cites an example in which the battery cell 20 includes two electrode terminals 214 and the two electrode terminals 214 are both located on the same wall, for example, both located on the first wall 21a.

The first wall 21a in an embodiment of this application may be any one of the walls of the shell 21 of the battery cell 20. For example, if the battery cell 20 is a cuboidal structure, the shell 21 may include six faces, that is, include six walls. This first wall 21a may be the largest-area wall or the smallest-area wall or another wall, without being limited herein. For another example, as shown in FIG. 14 to FIG. 16, an example is cited in which the first wall 21a is a sidewall 2113 of the housing 211, so as to facilitate processing.

The insulation structure 22 in an embodiment of this application is disposed on one side of the first wall 21a, the side being oriented toward the inside of the battery cell 20. In other words, the insulation structure 22 and the first wall 21a are stacked along the thickness direction of the first wall 21a. The specific shape of the insulation structure 22 may be set depending on practical applications. For example, the insulation structure 22 may be plate-shaped to closely fit the first wall 21a, and is configured to electrically isolate the first wall 21a from the components in the battery cell 20. For example, the insulation structure 22 may be configured to electrically isolate the first wall 21a from the electrode assembly in the battery cell 20, so as to avoid a short circuit.

Optionally, the positioning of the electrode terminal 214 in an embodiment of this application may be flexibly selected depending on practical applications. For example, a first through-hole 2101 is created in the first wall 21a. A second through-hole 221 corresponding to the first through-hole 2101 is created in the insulation structure 22. The electrode terminal 214 runs through the first through-hole 2101 and the second through-hole 221, so as to rivet the first wall 21a to the insulation structure 22, thereby facilitating the processing and implementing fixation between the electrode terminal 214, the first wall 21a, and the insulation structure 22.

Understandably, because the shell 21 of the battery cell 20 is usually made of metal, a short circuit may occur if the electrode terminal 214 is in direct contact with the first wall 21a. Therefore, an insulation component may be disposed between the electrode terminal 214 and the first wall 21a to avoid a short circuit. Specifically, the battery cell 20 further includes: a sealing structure 24, disposed on one side of the first wall 21a, the side being oriented away from the inside of the battery cell 20. The sealing structure 24 is configured to electrically isolate the electrode terminal 214 from the first wall 21a. A fifth through-hole 241 is created in the sealing structure 24. At least a part of the fifth through-hole 241 is accommodated in the first through-hole 2101. The electrode terminal 214 runs through the fifth through-hole 241, so as to implement sealing between the electrode terminal 214 and the first through-hole 2101.

On the one hand, the sealing structure 24 is usually made of an insulation material. By disposing the sealing structure 24 between the first wall 21a and the electrode terminal 214, a short circuit can be avoided between the electrode terminal 214 and the first wall 21a. On the other hand, a fifth through-hole 241 is created in the sealing structure 24. At least a part of the hole wall of the fifth through-hole 241 is located in the first through-hole 2101, or further, at least a part of the hole wall of the fifth through-hole 241 may be located in the second through-hole 221. In this way, in a case that the electrode terminal 214 runs through the fifth through-hole 241, a part of the sealing structure 24 is disposed between the electrode terminal 214 and the first through-hole 2101, or further, a part of the sealing structure 24 may also be disposed between the electrode terminal 214 and the second through-hole 221. In this way, because the first through-hole 2101 is created in the first wall 21a and the second through-hole 221 is created in the insulation structure 22, a gap may exist between the electrode terminal 214 and the first through-hole 2101, and between the electrode terminal 214 and the second through-hole 221. Therefore, the first through-hole 2101 and the second through-hole 221 can be sealed by the sealing structure 24. For example, in a process of riveting and squeezing, the sealing structure 24 is squeezed and deformed to implement sealing and avoid leakage of the internal electrolyte solution.

Understandably, the electrode terminal 214 in an embodiment of this application runs through the sealing structure 24, the first wall 21a, and the insulation structure 22 in sequence. However, the riveting effect of the electrode terminal 214 can restrict the relative translation between the first wall 21a and the insulation structure 22, but is unable to prevent the relative rotation between the first wall 21a and the insulation structure 22. Therefore, the dislocation between the first wall 21a and the insulation structure 22 can be further restricted by disposing a limiting structure. Specifically, a first limiting structure 201 is disposed on the first wall 21a, and a second limiting structure 202 corresponding to the first limiting structure 201 is disposed on the insulation structure 22. The second limiting structure 202 and the first limiting structure 201 coordinate with each other to prevent the relative movement between the insulation structure 22 and the first wall 21a. In this way, on the one hand, such an arrangement enables positioning for the first wall 21a and the insulation structure 22 to facilitate mounting of the first wall and the insulation structure. On the other hand, the arrangement avoids the dislocation between the first wall 21a and the insulation structure 22, for example, avoids the relative translation between the first wall 21a and the insulation structure 22, thereby ensuring high insulation performance of the insulation structure 22 for the first wall 21a and other components in the battery cell 20, avoiding a short circuit, and improving the safety performance of the battery cell 20.

Understandably, the coordination manner between the first limiting structure 201 and the second limiting structure 202 in an embodiment of this application may be set flexibly depending on practical applications, as exemplified below with reference to drawings.

Optionally, in an embodiment, the first limiting structure 201 includes a first protrusion structure protruding toward the insulation structure 22 and disposed on the first wall 21a. The second limiting structure 202 includes a first groove structure on the insulation structure 22. The opening of the first groove structure is oriented toward the first wall 21a. At least a part of the first protrusion structure is accommodated in the first groove structure. Specifically, as shown in FIG. 14 to FIG. 16, the first protrusion structure protruding toward the insulation structure 22 is disposed on a surface of the first wall 21a, the surface being oriented toward the insulation structure 22. Correspondingly, the first groove structure is disposed on a surface of the insulation structure 22, the surface being oriented toward the first wall 21a. The opening of the first groove structure is oriented toward the first wall 21a. The first limiting structure 201 includes the first protrusion structure. The second limiting structure 202 includes the first groove structure. Therefore, the coordination between the first limiting structure 201 and the second limiting structure 202 may include the following arrangement: at least a part of the first protrusion structure is accommodated in the first groove structure, so that the first groove structure can limit the movement of the first protrusion structure, and in turn, limit the movement of the first wall 21a with respect to the insulation structure 22, so as to implement positioning and fixation and avoid dislocation between the first wall 21a and the insulation structure 22. In addition, the above arrangement is simple, makes the structure stable, and facilitates processing.

Optionally, in another embodiment, the first limiting structure 201 includes a second groove structure on the first wall 21a. The opening of the second groove structure is oriented toward the insulation structure 22. The second limiting structure 202 includes a second protrusion structure protruding toward the first wall 21a and disposed on the insulation structure 22. At least a part of the second protrusion structure is accommodated in the second groove structure. Specifically, contrary to the positioning direction shown in FIG. 14 to FIG. 16, the second groove structure is disposed on a surface of the first wall 21a, the surface being oriented toward the insulation structure 22. The opening of the second groove structure is oriented toward the insulation structure 22. Correspondingly, the second protrusion structure protruding toward the first wall 21a is disposed on a surface of the insulation structure 22, the surface being oriented toward the first wall 21a. The first limiting structure 201 may include the second groove structure. The second limiting structure 202 may include the second protrusion structure. Therefore, the coordination between the first limiting structure 201 and the second limiting structure 202 may include the following arrangement: at least a part of the second protrusion structure is accommodated in the second groove structure, so that the second groove structure can limit the movement of the second protrusion structure, and in turn, limit the movement of the insulation structure 22 with respect to the first wall 21a, so as to implement positioning and fixation and avoid dislocation between the first wall 21a and the insulation structure 22. In addition, the above arrangement is simple, makes the structure stable, and facilitates processing.

Optionally, the first limiting structure 201 in an embodiment of this application may include at least one first protrusion structure and/or at least one second groove structure. Correspondingly, the second limiting structure 202 may include at least one first groove structure and/or at least one second protrusion structure. Such examples constitute no limitation on embodiments of this application. For example, in order to save the space occupied by the first limiting structure 201 on the first wall 21a and the space occupied by the second limiting structure 202 on the insulation structure 22, the first limiting structure 201 may include one first protrusion structure or one second groove structure disposed on the first wall 21a. Correspondingly, the second limiting structure 202 may include one first groove structure or one second protrusion structure disposed on the insulation structure 22, so as to facilitate processing.

Optionally, the methods for disposing the first protrusion structure, the first groove structure, the second protrusion structure, and the second groove structure in an embodiment of this application may be selected flexibly depending on practical applications, so as to improve the processing efficiency of the battery cell 20.

For example, the first protrusion structure and the second protrusion structure may be implemented in the form of grooves. The first protrusion structure is a groove on the first wall 21a, the groove is recessed toward the insulation structure 22 and protrudes from a surface of the first wall 21a, and the surface is oriented toward the inside of the battery cell 20; and/or, the second protrusion structure is a groove on the insulation structure 22, the groove is recessed toward the first wall 21a and protrudes from a surface of the insulation structure 22, and the surface is oriented away from the inside of the battery cell 20. Specifically, as shown in FIG. 14 to FIG. 16, the first wall 21a is recessed toward the insulation structure 22 to form a groove. The bottom wall of the groove protrudes from a surface of the first wall 21a so as to serve as the first protrusion structure, where the surface is oriented toward the inside of the battery cell 20. Similarly, contrary to the positioning direction shown in FIG. 14 to FIG. 16, the insulation structure 22 is recessed toward the first wall 21a to form a groove. The bottom wall of the groove protrudes from a surface of the insulation structure 22 so as to serve as the second protrusion structure, where the surface is oriented away from the inside of the battery cell 20. In contrast to a circumstance in which a solid protrusion structure is disposed directly on the surface of the first wall 21a or the surface of the insulation structure 22, the first protrusion structure and/or the second protrusion structure disposed in the form of grooves can effectively reduce the weight of the first wall 21a and/or the insulation structure 22 and simplify the processing method. For example, the first protrusion structure and the first groove structure can be processed synchronously by stamping, or, the second protrusion structure and the second groove structure can be processed synchronously by stamping, thereby improving the processing efficiency of the battery cell 20.

Optionally, the first groove structure and the second groove structure may be disposed with reference to the first protrusion structure and the second protrusion structure respectively. The first groove structure protrudes from a surface of the insulation structure 22, the surface being oriented toward the inside of the battery cell 20; and/or, the second groove structure protrudes from a surface of the first wall 21a, the surface being oriented away from the inside of the battery cell 20. If the first groove structure of the insulation structure 22 protrudes from a surface of the insulation structure 22, the surface being oriented toward the inside of the battery cell 20, then the depth of the first groove structure is less limited by the thickness of the insulation structure 22. Therefore, although the thickness of the insulation structure 22 is limited, the depth of the first groove structure may be greater than the thickness of the insulation structure 22. This enables a larger part of the first protrusion structure to be accommodated in the first groove structure, thereby increasing the stability between the first protrusion structure and the first groove structure, and in turn, increasing the stability between the first limiting structure 201 and the second limiting structure 202. Similarly, if the second groove structure of the first wall 21a protrudes from a surface of the first wall 21a, the surface being oriented away from the inside of the battery cell 20, then the depth of the second groove structure is less limited by the thickness of the first wall 21a. Therefore, although the thickness of the first wall 21a is limited, the depth of the second groove structure may be greater than the thickness of the first wall 21a. This enables a larger part of the second protrusion structure to be accommodated in the second groove structure, thereby increasing the stability between the second protrusion structure and the second groove structure, and in turn, increasing the stability between the first limiting structure 201 and the second limiting structure 202.

Understandably, if the first protrusion structure and the second protrusion structure are grooves, then the thickness of the bottom wall of the groove may be less than or equal to or slightly greater than the thickness of the first wall 21a on which the groove is located, or the thickness of the insulation structure 22 on which the groove is located. Alternatively, instead, the first protrusion structure may be a relatively thick bump on the first wall 21a. For example, the thickness of the first protrusion structure is greater than the thickness of other regions of the first wall 21a on which the first protrusion structure is located, so as to cause the first protrusion structure to protrude from a surface of the first wall 21a, the surface being oriented toward the insulation structure 22. Similarly, instead, the second protrusion structure may be a relatively thick bump on the insulation structure 22. For example, the thickness of the second protrusion structure is greater than the thickness of other regions of the insulation structure 22 on which the second protrusion structure is located, so as to cause the second protrusion structure to protrude from a surface of the insulation structure 22, the surface being oriented toward the first wall 21a.

Optionally, for a circumstance in which the first protrusion structure is a relatively thick bump, the first protrusion structure and the first wall 21a may be formed in one piece. For example, the first protrusion structure may be formed on the first wall 21a by stamping, milling, or other means. Alternatively, the first protrusion structure and the first wall 21a may be formed separately. For example, a through-hole is formed in the first wall 21a. The first protrusion structure is mounted in the through-hole by welding, riveting, snap-fitting, or other means. The mounting manner is not particularly limited herein. Similar to the first protrusion structure, in a circumstance in which the second protrusion structure is a relatively thick bump, the second protrusion structure and the insulation structure 22 may be formed in one piece or formed separately, without being limited herein.

Optionally, the battery cell 20 further includes: a connection component 23, configured to be electrically connected to the electrode terminal 214. The connection component 23 is disposed on one side of the insulation structure 22, the side being oriented toward the inside of the battery cell 20. A third through-hole 231 corresponding to the second through-hole 221 is created on the connection component 23. The electrode terminal 214 runs through the third through-hole 231, so as to rivet the connection component 23, the insulation structure 22, and the first wall 21a. Specifically, as shown in FIG. 14 to FIG. 16, the connection component 23 in an embodiment of this application may be configured to be electrically connected to the electrode terminal 214, and may be further configured to be electrically connected to a tab of an electrode assembly, so as to implement electrical connection between the electrode terminal 214 and the tab. A third through-hole 231 is created on the connection component 23. The first through-hole 2101 in the first wall 21a, the second through-hole 221 in the insulation structure 22, and the third through-hole 231 in the connection component 23 are stacked sequentially, so that the electrode terminal 214 can run through the first through-hole 2101, the second through-hole 221, and the third through-hole 231 sequentially to implement riveting and fixation between the first wall 21a, the insulation structure 22, and the connection component 23, thereby simplifying the processing process and improving the processing efficiency of the battery cell 20.

Optionally, the electrode terminal 214 may be connected to the connection component 23 by welding to further increase the stability of connection between the electrode terminal 214 and the connection component 23 and ensure high performance of the battery cell 20.

Optionally, the connection component 23 further includes a third limiting structure 232. The third limiting structure 232 coordinates with the second limiting structure 202 to prevent relative movement between the connection component 23 and the insulation structure 22. Specifically, the third limiting structure 232 of the connection component 23 may coordinate with the second limiting structure 202. In other words, the first limiting structure 201, the second limiting structure 202, and the third limiting structure 232 may coordinate with each other to stop relative movement between the first wall 21a, the insulation structure 22, and the connection component 23. In this way, the connection component 23 is fixed, thereby facilitating assembling and mounting of the battery cell 20. This also ensures that the insulation structure 22 electrically isolates the first wall 21a from the connection component 23, thereby avoiding a short circuit between the connection component 23 and the first wall 21a.

Optionally, the third limiting structure 232 may be disposed in a way that is set flexibly depending on practical applications. For example, the third limiting structure 232 may be disposed accordingly based on the way in which the first limiting structure 201 and the second limiting structure 202 are disposed. For example, if the first limiting structure 201 includes a first protrusion structure, and the second limiting structure 202 includes a first groove structure, then the first groove may protrude from the surface of the insulation structure 22 toward the connection component 23. Therefore, correspondingly, the third limiting structure 232 may include a groove or through-hole disposed on the connection component 23 and opened toward the insulation structure 22 to accommodate at least a part of the first groove structure and implement mutual coordination between the third limiting structure 232 and the second limiting structure 202.

Referring to FIG. 14 to FIG. 16 as an example, corresponding to the first limiting structure 201 and the second limiting structure 202, the third limiting structure 232 includes a fourth through-hole in the connection component 23. The fourth through-hole is configured to accommodate at least a part of the second limiting structure 202. Specifically, the first limiting structure 201 may include a first protrusion structure on the first wall 21a. The second limiting structure 202 may include a first groove structure on the insulation structure 22. The first groove structure protrudes from a surface of the insulation structure 22, the surface being oriented toward the inside of the battery cell 20. Therefore, on condition that the first groove structure can accommodate at least a part of the first protrusion structure, the third limiting structure 232 may include a fourth through-hole configured to accommodate at least a part of the first groove structure. In this way, in contrast to a circumstance in which the third limiting structure 232 is disposed in the form of a groove, the fourth through-hole can save the space occupied by the bottom wall of the groove, improve the utilization rate of the space inside this battery cell 20, reduce the weight of the connection component 23, and in turn, reduce the weight of the battery cell 20, thereby improving the performance of the battery cell 20. In addition, the first groove structure on the insulation structure 22 is disposed between the inner wall of the fourth through-hole and the first protrusion structure, thereby avoiding a short circuit between the connection component 23 and the first wall 21a.

For another example, if the first limiting structure 201 includes a second groove structure, the second limiting structure 202 includes a second protrusion structure, and the second protrusion structure is a groove created on the insulation structure 22, then the third limiting structure 232 may include a third protrusion structure protruding toward the insulation structure 22. The third protrusion structure is at least partially accommodated in the second protrusion structure to implement mutual coordination between the third limiting structure 232 and the second limiting structure 202.

Understandably, the positions and dimensions of the first limiting structure 201 and the second limiting structure 202 in an embodiment of this application may be set flexibly depending on practical applications, For example, the dimensions and position of the first limiting structure 201 may be set based on the dimensions of the first wall 21a, and the dimensions and position of the second limiting structure 202 correlate with the dimensions and position of the first limiting structure 202, so that the first limiting structure 201 and the second limiting structure 202 can coordinate with each other. The following description uses the first wall 21a and the first limiting structure 201 as an example.

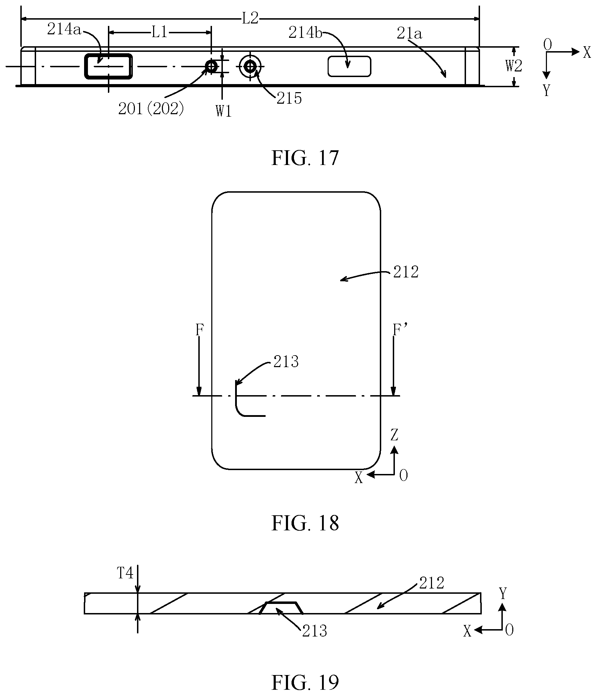

FIG. 17 is a schematic diagram of an outer surface of a first wall 21a of a battery cell 20 according to an embodiment of this application. The outer surface of the first wall 21a is a surface of the first wall 21a, the surface being oriented away from the inside of the battery cell 20. As shown in FIG. 17, along a length direction X of the first wall 21a, the value range of a ratio of a distance L1 between the electrode terminal 214 and the first limiting structure 201 to a length L2 of the first wall 21a, denoted as L1/L2, is [10%, 48%]. If the L1/L2 ratio is set to an overly large value, the distance L1 between the first limiting structure 201 and the electrode terminal 214 in the length direction X of the first wall 21a is overly long. The overly long distance between the first limiting structure 201 and the electrode terminal 214 results in the following consequence: in a process of mounting the electrode terminal 214, the first limiting structure 201 is unable to effectively restrict the relative movement between the first wall 21a and the insulation structure 22, thereby impairing the processing efficiency of the battery cell 20. Conversely, if the L1/L2 ratio is set to an overly small value, the distance L1 between the first limiting structure 201 and the electrode terminal 214 will be overly short. The overly short distance between the first limiting structure 201 and the electrode terminal 214 is very prone to hinder the mounting of the electrode terminal 214. For example, a first through-hole 2101 configured to accommodate at least a part of the electrode terminal 214 is created on the first wall 21a. If the distance L1 between the first limiting structure 201 and the electrode terminal 214 is overly short, the distance between the first limiting structure 201 and the first through-hole 2101 will also be overly short. Mutual interference is very prone to occur in between, thereby impairing the structural strength and stability of the first wall 21a, and reducing the mounting efficiency of the battery cell 20 and increasing the processing difficulty.

Therefore, the value of the L1/L2 ratio needs to avoid being overly large or overly small. For example, the value range of the L1/L2 ratio may be [10%, 48%]; or may be [20%, 40%]; or, the value of the L1/L2 ratio may be set to 10%, 15%, 20%, 25%, 30%, 35%, 40%, or 45%.

Understandably, as shown in FIG. 17, the distance L1 between the electrode terminal 214 and the first limiting structure 201 in an embodiment of this application may also represent: a distance between the center of the electrode terminal 214 and the center of the first limiting structure 201 along the length direction X of the first wall 21a. Alternatively, in reference to the distance L1 between the electrode terminal 214 and the first limiting structure 201, the electrode terminal 214 may denote any one of the electrode terminals 214 on the first wall 21a. For example, L1 may be a distance between the first limiting structure 201 and an electrode terminal 214 closest to the first limiting structure 201, as shown in FIG. 17. If the electrode terminal 214 closest to the first limiting structure 201 is a positive electrode terminal 214a, then L1 is a distance between the first limiting structure 201 and the positive electrode terminal 214a, but this constitutes no limitation on any embodiment of this application.

Optionally, along the width direction Y of the first wall 21a, a value range of the ratio of the dimension W1 of the first limiting structure 201 to the width W2 of the first wall 21a, denoted as W1/W2, is [15%, 95%]. If the W1/W2 ratio is overly high, the dimension W1 of the first limiting structure 201 is overly large in the width direction Y of the first wall 21a, thereby increasing the processing difficulty of the first limiting structure 201. In addition, the first limiting structure 201 is very prone to interfere with other walls intersecting the first wall 21a. Conversely, if the W1/W2 ratio is overly low, the dimension W1 of the first limiting structure 201 is overly small in the width direction Y of the first wall 21a. Because the width W2 of the first wall 21a is limited, the small-sized first limiting structure 201 increases the processing difficulty of the first limiting structure 201. In addition, the relative movement between the first wall 21a and the insulation structure 22 can hardly be limited by the undersized first limiting structure 201.

Therefore, the value of the W1/W2 ratio needs to avoid being overly large or overly small. For example, the value range of the W1/W2 ratio may be [15%, 95%]; or may be [20%, 40%]; or, the value of the W1/W2 ratio may be set to 15%, 20%, 25%, 30%, 35%, 40%, 45%, 50%, 55%, 60%, 65%, 70%, 75%, 80%, 85%, 90%, or 95%.

Understandably, the length direction X of the first wall 21a in an embodiment of this application is perpendicular to the width direction Y. The length L2 of the first wall 21a represents the dimension of the first wall 21a in the length direction X. The width W2 of the first wall 21a represents the dimension of the first wall 21a in the width direction Y. The length L2 of the first wall 21a is greater than the width W2 of the first wall 21a.

FIG. 18 is a schematic diagram of a surface of a cover plate 212 according to an embodiment of this application, where the surface is oriented away from the inside of the battery cell 20. For example, the cover plate 212 shown in FIG. 19 may be a cover plate 212 of any one of the battery cells 20 shown in FIG. 3 to FIG. 16. FIG. 19 is a schematic diagram of a partial cross-section of a cover plate 212 according to an embodiment of this application. For example, the cross-sectional schematic diagram may be a partial schematic diagram of a cross-section obtained by sectioning along the F-F' direction shown in FIG. 18.

Optionally, the end cap 212 in an embodiment of this application is configured to fit and cover the opening 2111 of the housing 211 to isolate the internal environment of the battery cell 20 from the external environment. The shape of the cover plate 212 may be adapted to the shape of the housing 211. For example, as shown in FIG. 18 to FIG. 19, the housing 211 is a cuboidal structure, and the cover plate 212 is a rectangular plate-shaped structure adapted to the housing 211.

In the battery cell 20, the internal space formed by the housing 211 and the cover plate 212 may be configured to accommodate the electrode terminal. The electrode assembly is a component in which electrochemical reactions occur in the battery cell 20. Specifically, an electrode assembly may include a tab and an electrode body portion. The tab of the electrode assembly may include a positive tab and a negative tab. The positive tab may be formed by stacking the parts uncoated with a positive active material layer on a positive electrode plate. The negative tab may be formed by stacking the parts uncoated with a negative active material layer on a negative electrode plate. The electrode body portion may be formed by stacking or winding a part coated with the positive active material layer on the positive electrode plate and a part coated with the negative active material layer on the negative electrode plate.

Understandably, the number of electrode assemblies in the housing 211 may be one or more, depending on actual needs. The electrode assembly may be cylindrical, cuboidal, or the like. If the electrode assembly is cylindrical, the housing 211 may be cylindrical accordingly. If the electrode assembly is cuboidal, the housing 211 may be cuboidal accordingly.

Optionally, the cover plate 212 in an embodiment of this application may be any one wall of the battery cell 20. For example, the cover plate 212 is a largest-area wall of the battery cell 20, thereby facilitating mounting of components inside the battery cell 20, for example, facilitating mounting of the electrode assembly, and speeding up processing of the battery cell 20.

Optionally, the material of the shell 21 in an embodiment of this application may be selected flexibly depending on practical applications. The material of the cover plate 212 may be the same as or different from the material of the housing 211. For example, the material of the housing 211 includes stainless steel and/or alloy; and/or the material of the cover plate 212 includes stainless steel and/or alloy, so as to endow the housing 211 and the cover plate 212 with high hardness and ensure high structural strength of the battery cell 20. For another example, in an embodiment of this application, the housing 211 may be made of a variety of materials such as copper, iron, aluminum, steel, or aluminum alloy. The cover plate 212 may be made of a variety of materials such as copper, iron, aluminum, steel, or an aluminum alloy.

Optionally, the thickness of the shell 21 in an embodiment of this application may be set flexibly depending on practical applications. In addition, the thicknesses of different walls of the shell 21 may be the same or different. For example, the thickness of the cover plate 212 may be the same as or different from the thickness of the housing 211. The thicknesses of different walls of the housing 211 may be the same or different. For example, as shown in FIG. 18 to FIG. 19, using the cover plate 212 as an example, the value range of the thickness T4 of the cover plate 212 is [50 µm, 200 µm], so as to ensure sufficient structural strength of the battery cell 20. For example, the thickness T of the cover plate 212 may be set to 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm.

Similarly, the value range of the thickness of any one wall of the housing 211 is [50 µm, 200 µm], so as to ensure sufficient structural strength of the battery cell 20. For example, the thickness T of any one wall of the housing 211 may be set to 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm. For another example, for the housing 211 shown in FIG. 12 and FIG. 13, the thickness of the sidewall 2113 of the housing is increased by an amount equivalent to the thickness of the second extension structure 2112. Therefore, the value range of the total thickness T3 of the thickened sidewall 2113 may be set to [60 µm, 250 µm] to ensure sufficient structural strength of the battery cell 20 as well as high connection strength and sealing reliability between the housing 211 and the cover plate 212. For example, the thickness T3 of the thickened sidewall 2113 may be set to 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, or 250 µm.

Optionally, a pressure relief mechanism 213 may be disposed on the shell 21 of the battery cell 20 in an embodiment of this application. For example, as shown in FIG. 18 to FIG. 19, a pressure relief mechanism 213 is disposed on the cover plate 212; or, unlike the illustration in FIG. 18 and FIG. 19, the pressure relief mechanism 213 may be disposed on a wall opposite to the cover plate 212; or, the pressure relief mechanism may be disposed on another wall. The pressure relief mechanism 213 in an embodiment of this application is configured to be actuated to relieve the internal pressure or temperature of the battery cell 20 when the internal pressure or temperature of the battery cell 20 reaches a preset threshold.

The preset threshold may be adjusted depending on design requirements. The preset threshold may depend on the material of one or more of the positive electrode plate, the negative electrode plate, the electrolyte solution, or the separator in the battery cell 20. The term "actuated" referred to herein means that the pressure relief mechanism 213 performs an action to relieve the internal pressure or temperature of the battery cell 20. The action performed by the pressure relief mechanism 213 may include, but is not limited to rupturing, tearing, or melting at least a part of the pressure relief mechanism 213, and the like. When the pressure relief mechanism 213 is actuated, high-temperature and high-pressure substances inside the battery cell 20 are expelled as emissions out of the pressure relief mechanism 213. In this way, the pressure of the battery cell 20 is relieved under a circumstance of a controllable pressure or temperature to avoid potential severer accidents.

The emissions out of the battery cell 20 mentioned in this application include but are not limited to: electrolyte solution, melted or split positive and negative electrode plates, fragments of the separator, reaction-induced high-temperature and high-pressure gases, flames, and the like.

The pressure relief mechanism 213 on the battery cell 20 is essential to the safety of the battery. For example, when a short circuit, overcharge, or the like occurs on the battery cell 20, thermal runaway may occur inside the battery cell 20, resulting in a surge in pressure or temperature. In this case, the internal pressure and heat can be released outward by actuating the pressure relief mechanism 213, thereby preventing explosion and fire of the battery cell 20.

Optionally, the pressure relief mechanism 213 in an embodiment of this application may be disposed on any one wall of the shell 21 of the battery cell 20. For example, an embodiment of this application primarily cites an example in which the pressure relief mechanism 213 is disposed on the cover plate 212. However, the relevant description is also applicable to the circumstance in which the pressure relief mechanism 213 is located on other walls. In addition, the pressure relief mechanism 213 may be a part of the cover plate 212, or may be a discrete structure independent of the cover plate 212 and fixed onto the cover plate 212 by means such as welding.

For example, the pressure relief mechanism 213 may be a discrete structure independent of the cover plate 212. The pressure relief structure 213 may be in the form of an explosion-proof valve, a gas valve, a pressure relief valve, a safety valve, or the like, and may specifically adopt a pressure-sensitive or temperature-sensitive element or structure. To be specific, when the internal pressure or temperature of the battery cell 20 reaches a preset threshold, the pressure relief mechanism 213 performs an action or a fragile structure disposed in the pressure relief mechanism 213 is broken to form a vent or channel for relieving the internal pressure or temperature.

In another example, when the pressure relief mechanism 213 is a part of the cover plate 212, for example, when the pressure relief mechanism 213 is formed by creating a nick on the cover plate 212, that is, if the pressure relief mechanism 213 is a nick on the cover plate 212, then the thickness of a region in which the nick is located is less than the thickness of the remaining region other than the nick on the cover plate 212. The nick is the most fragile position on the pressure relief mechanism 213. When the gas generated by the battery cell 20 is excessive so that the internal pressure of the housing 211 rises to a threshold or when the heat generated by internal reaction of the battery cell 20 causes the internal temperature of the battery cell 20 to rise to a threshold, the pressure relief mechanism 213 may break at the nick to cause communication between the inside of the housing 211 and the outside. The gas pressure and temperature are released outward through the ruptured pressure relief mechanism 213, thereby preventing the battery cell 20 from exploding.

For example, as shown in FIG. 18 to FIG. 19, the pressure relief mechanism 213 is an L-shaped nick created on a surface of the cover plate 212, the surface being oriented away from the inside of the battery cell 20. To be specific, the pressure relief mechanism 213 includes two parts that are connected and perpendicular to each other. In this way, when the temperature or pressure inside the battery cell 20 reaches a preset threshold, the pressure relief mechanism 213 can be broken along any direction. The pressure relief mechanism 213 is broken in time to relieve the internal pressure and temperature of the battery cell 20 in time to avoid an explosion of the battery cell 20. In addition, the pressure relief mechanism 213 is disposed on the outer surface of the cover plate 212 to prevent the electrolyte solution inside the battery cell 20 from accumulating within the nick, and prevent the electrolyte solution from corroding the pressure relief mechanism 213, thereby improving the safety of the pressure relief mechanism 213.

Optionally, as shown in FIG. 19, when the pressure relief mechanism 213 in an embodiment of this application is a nick, the cross-section of the nick may be an isosceles trapezoid. This shape facilitates processing on the one hand. On the other hand, compared to a rectangular cross-section, the isosceles trapezoidal cross-section avoids the concentration of stress, and improves the stability of the pressure relief mechanism 213 during normal use of the battery cell 20.

In the battery cell 20 in an embodiment of this application, the cover plate 212 and/or the housing 211 includes an extension portion 210. Through the extension portion 210, the housing 211 can be connected to the cover plate 212. For example, for the cover plate 212, an extension portion 210 extending toward the housing 211 may be disposed in the edge region of the cover plate 212. For the housing 211, an extension portion 210 extending toward the center of the opening 2111 of the housing 211 may be disposed in the edge region of the sidewall 2113 of the housing 211. Through the disposed extension portion 210, the contact area between the housing 211 and the cover plate 212 is increased. In this way, in performing hermetic connection between the housing 211 and the cover plate 212, the area of a connectable region between the housing 211 and the cover plate 212 is increased. For example, the area of a weldable region between the housing 211 and the cover plate 212 is increased. Further, this can reduce the limitation imposed by the thicknesses of the housing 211 and the cover plate 212 on the hermetic connection between the housing 211 and the cover plate 212. The disposed extension portion 210 can increase the strength of the hermetic connection between the housing 211 and the cover plate 212, improve the sealing reliability, and improve the processing efficiency and structural strength of the battery cell 20.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell (20), **characterized in that** the battery cell comprises:
a housing (211) of a hollow structure with an opening (2111); and
a cover plate (212), configured to fit and cover the opening (2111), wherein
an extension portion (210) extending toward the housing (211) is disposed at an edge region of the cover plate (212), and/or, an extension portion (210) extending toward a center of the opening (2111) is disposed at an edge region of a sidewall (2113) of the housing (211), wherein the sidewall is configured to form the opening (2111), and the extension portion (210) is configured to connect the housing (211) and the cover plate (212).

2. The battery cell (20) according to claim 1, **characterized in that** the extension portion (210) comprises a first extension structure (2122), the cover plate (212) comprises a body portion (2121) and a first extension structure (2122), the first extension structure (2122) extends from an edge region of the body portion (2121) toward the housing (211), the body portion (2121) is configured to fit and cover the opening (2111), and the first extension structure (2122) is configured to be connected to the housing (211).

3. The battery cell (20) according to claim 2, **characterized in that** the first extension structure (2122) is configured to be connected to an inner surface of the sidewall (2113), and the inner surface of the sidewall (2113) is a surface, oriented toward inside of the battery cell (20), of the sidewall (2113).

4. The battery cell (20) according to claim 3, **characterized in that** the cover plate (212) further comprises a lap portion (2123) connected to the body portion (2121), the lap portion (2123) extends away from a center of the body portion (2121) from an edge of the body portion (2121), the lap portion (2123) is connected to a thickness end face (2113a) of the sidewall (2113), and the thickness end face (2113a) is an end face, oriented toward the cover plate (212), of the sidewall (2113).

5. The battery cell (20) according to claim 2, **characterized in that** the first extension structure (2122) is configured to be connected to an outer surface of the sidewall (2113), and the outer surface of the sidewall (2113) is a surface, oriented away from inside of the battery cell (20), of the sidewall (2113).

6. The battery cell (20) according to any one of claims 2 to 5, **characterized in that** a value range of a thickness of the first extension structure (2122) is [0.05 mm, 0.2 mm]; and/or
a value range of a height by which the first extension structure (2122) protrudes from the body portion (2121) is [0.05 mm, 0.2 mm].

7. The battery cell (20) according to any one of claims 1 to 6, **characterized in that** the extension portion (210) comprises a second extension structure (2112) disposed on the sidewall (2113), at least a part of the second extension structure (2112) is located in the edge region of the sidewall (2113), the edge region is configured to form the opening (2111), the second extension structure (2112) extends from the sidewall (2113) toward the center of the opening (2111), and the second extension structure (2112) is configured to be connected to the cover plate (212).

8. The battery cell (20) according to claim 7, **characterized in that** the sidewall (2113) comprises a thickness end face (2113a), the thickness end face (2113a) is an end face, oriented toward the cover plate (212), of the sidewall (2113), the thickness end face (2113a) is flush with a surface of the second extension structure (2112), the surface is oriented toward the cover plate (212), and the thickness end face (2113a) and the second extension structure (2112) are configured to be connected to the cover plate (212).

9. The battery cell (20) according to claim 7 or 8, **characterized in that** the second extension structure (2112) is a protrusion structure located in the edge region of the sidewall (2113) and protruding from an inner surface of the sidewall (2113), the edge region is configured to form the opening (2111), and the inner surface of the sidewall (2113) is a surface, oriented toward inside of the battery cell (20), of the sidewall (2113).

10. The battery cell (20) according to claim 9, **characterized in that** a value range of a thickness of the second extension structure (2112) is [0.05 mm, 0.2 mm]; and/or
a value range of a height by which the second extension structure (2112) protrudes from the sidewall (2113) is [0.05 mm, 0.2 mm].

11. The battery cell (20) according to claim 8, **characterized in that** a dimension of the second extension structure (2112) along a first direction is equal to a dimension of the sidewall (2113) along the first direction, and the first direction is perpendicular to the cover plate (212).

12. The battery cell (20) according to claim 11, **characterized in that** a difference between a total length of the thickness end face (2113a) plus a surface of the second extension structure (2112) along a second direction and a thickness of the cover plate (212) is greater than or equal to 0.01 mm, the surface is oriented toward the cover plate (212), and the second direction is perpendicular to the sidewall (2113).

13. The battery cell (20) according to any one of claims 1 to 12, **characterized in that** the cover plate (212) is a largest-area wall of the battery cell (20).

14. The battery cell (20) according to any one of claims 1 to 13, **characterized in that** a material of the housing (211) comprises stainless steel and/or alloy; and/or
a material of the cover plate (212) comprises stainless steel and/or alloy.

15. The battery cell (20) according to any one of claims 1 to 14, **characterized in that** a value range of a thickness of the housing (211) is [50 µm, 200 µm]; and/or
a value range of a thickness of the cover plate (212) is [50 µm, 200 µm].

16. A battery, **characterized in that** the battery comprises:
a plurality of the battery cells (20) according to any one of claims 1 to 15.

17. An electrical device, **characterized in that** the electrical device comprises:
a plurality of the battery cells (20) according to any one of claims 1 to 15, wherein the battery cells (20) are configured to provide electrical energy for the electrical device.
